# FASCICULE DE BREVET EUROPEEN

(11) **EP 0 579 519 B1**
(45) Date de publication et mention de la délivrance du brevet: **24.07.1996**
(21) Numéro de dépôt: 93401467.1
(22) Date de dépôt: 09.06.1993
(51) Int. Cl.: F16K 39/02, F16K 39/04

(54) **Vanne pilotée**
Servogesteuertes Ventil
Pilot controlled valve

(30) Priorité: 12.06.1992 FR 9207096
(43) Date de publication de la demande: 19.01.1994
(73) Titulaire: LEGRIS S.A., F-35000 Rennes (FR)
(72) Inventeur: Serot, Pierre, F-92260 Fontenay-aux-Roses (FR)
(74) Mandataire: Robert, Jean-Pierre

(56) Documents cités:
- EP-A- 0 140 432
- CH-A- 338 664
- DE-B- 1 091 824
- DE-U- 7 045 539
- FR-A- 854 873
- FR-A- 1 194 431
- FR-A- 2 667 376
- US-A- 2 927 604

## Description

La présente invention concerne une vanne pilotée pour notamment mais non exclusivement un réseau de distribution de fluide comprimé.

On connaît de nombreux dispositifs pour réaliser l'interruption ou l'ouverture d'une conduite à distance. On citera par exemple le dispositif décrit dans le document FR-A-2.667.376. La construction de ces dispositifs est relativement complexe et le principe de leur fonctionnement n'est pas entièrement satisfaisant. Par exemple la position d'ouverture de la vanne est tout à fait instable, le tiroir étant attelé à la structure fixe par des soufflets élastiques qui constituent un système vibratoire qui est entretenu par la circulation du fluide qui agit sur une surface frontale du piston obturateur. En outre, l'effort à développer pour ouvrir la vanne n'est pas nul et est dépendant de la pression du fluide circulant dans le conduit.

L'invention, pour obtenir un résultat identique, propose une architecture de vanne de construction simple grâce à laquelle l'obturateur est équilibré comme dans le document DE-B-1 091 824 du point de vue des efforts qu'il subit l'énergie à dépenser pour faire changer d'état cette vanne étant minimale, tout en permettant un pilotage de réalisation aisée.

Ainsi l'invention concerne précisément une vanne comportant un corps sensiblement allongé creux et équipé à ses extrémités longitudinales de moyens de raccordement à une canalisation à obturer, ce corps comportant une paroi transversale au travers de laquelle est ménagé un canal central et comportant un élément d'obturation mobile parallèlement à l'écoulement du fluide, entre une position de fermeture dans laquelle une zone de cet élément est au contact d'une portée fixe ménagée sur la paroi transversale et une position d'ouverture dans laquelle cette même zone est éloignée de cette portée, dans laquelle vanne l'élément d'obturation est en forme de piston possédant deux têtes d'extrémité formant les parois coulissantes de deux chambres coaxiales au canal situées dans le corps de part et d'autre de la paroi transversale. Selon l'invention cette vanne est une vanne pilotée et est telle que les chambres sont isolées du canal intérieur du corps et comportent des moyens pour agir sur les têtes d'extrémité afin de déplacer l'élément par rapport à la portée et que la somme des projections dans un plan transversal des surfaces de l'élément d'obturation exposées à la pression régnant dans le canal, situées en amont de la zone de contact de l'élément d'obturation avec la portée et tournées vers l'aval est égale à la somme des mêmes projections des surfaces semblablement situées, exposées à cette pression et tournées vers l'amont.

L'élément d'obturation peut être un tiroir ou un clapet.

Dans une variante qui permet de faire chuter la pression dans la partie aval de la canalisation interrompue, le corps comporte un orifice de purge, situé en aval de la zone de contact entre l'organe d'obturation et la portée, que l'organe d'obturation découvre lorsqu'il est dans son état d'ouverture du canal.

D'autres caractéristiques et avantages de l'invention ressortiront de la description qui en est donnée ci-dessus en référence aux dessins annexés dans lesquels :
- les figures 1 et 2 sont deux schémas en coupe longitudinale de deux variantes de réalisation de l'invention,
- les figures 3 et 4 sont deux coupes longitudinales orthogonales d'une première réalisation industrielle de la figure 2.
- la figure 5 est une vue en coupe longitudinale d'une seconde réalisation industrielle de la vanne selon l'invention.

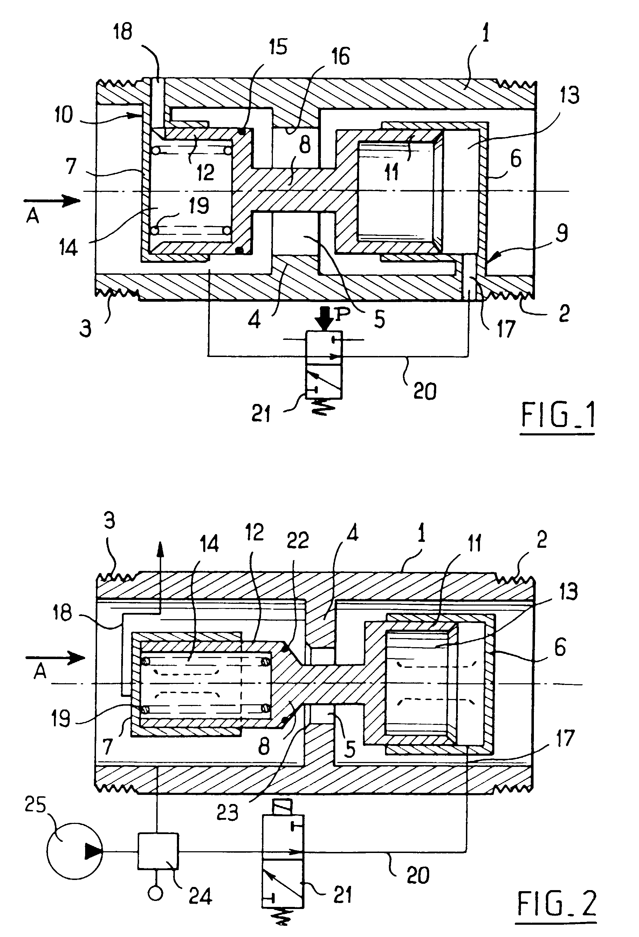

A la figure 1, on a représenté une vanne selon l'invention qui comporte un corps 1 cylindrique dont les extrémités sont équipées de moyens 2 et 3 pour sa connexion à des tronçons d'une conduite dont on souhaite pouvoir commander l'ouverture et la fermeture. Ce corps cylindrique comporte une cloison transversale 4 traversée par un canal central 5 cylindrique.De chaque côté de cette paroi, le corps 1 porte deux enceintes 6 et 7 qui, ouvertes en direction de la paroi forment des chambres de coulissement pour les extrémités d'un élément d'obturation 8 qui s'étend coaxialement au canal 5. Les enceintes 6 et 7 sont disposées au centre du corps 1 et y sont maintenues par des parois radiales telles que celles 9 et 10 représentées. Il résulte de cette disposition que le fluide d'écoulant dans le sens A emprunte un canal annulaire dans le corps 1 d'abord autour de l'enceinte amont 7, de l'élément 8 à l'intérieur de l'ouverture 5 puis autour de l'enceinte aval 6.

Les extrémités de l'élément 8 sont conformées en têtes de piston 11 et 12 creuses qui forment dans chaque enceinte une chambre fermée 13, 14 isolée du conduit annulaire emprunté par le fluide. La tête de piston 12 comporte une zone 15 (marquée par un joint torique d'étanchéité) qui peut être portée au contact, à la manière d'un tiroir, du bord cylindrique 16 du canal 5.

Ainsi, quand l'élément 8 est poussé vers la droite de la figure 1, la tête de piston 12 ferme totalement le conduit 5 alors que la tête de piston 11 vient en appui sur le fond de l'enceinte 6. On remarque que l'obturateur 8 ne présente, en amont de la zone 15 (joint) de contact de la tête 12 avec la portée 16, aucune surface qui ait une projection transversale non nulle. De ce fait (l'obturateur étant un tiroir) l'effort pour ouvrir le canal 5 est indépendant de la pression du fluide en amont du contact 12-16 et ne doit que vaincre les frottements entre tiroir et portée.

La manoeuvre de l'obturateur 8 peut s'opérer en introduisant sélectivement dans l'une des chambres 13 et 14 un fluide sous pression et en purgeant l'autre grâce à des conduits d'alimentation-échappement 17, 18 prévus dans les cloisons radiales 9 et 10. Elle peut également être obtenue par un ressort 19 dans la chambre 14 qui repousse l'obturateur 8 vers la droite en l'absence de fluide sous pression dans la chambre 13 et qui est comprimé si du fluide sous pression est introduit dans cette chambre 13. Le conduit 18 constitue alors un simple évent de respiration de la chambre 14.

On notera que la source de fluide sous pression peut être constituée par la portion de canal située en amont de la cloison 4. Dans ce cas, la chambre 13 est reliée par le conduit 17 et un conduit 20 à cette partie amont. Un distributeur 21 permet d'alimenter la chambre 13 ou de la purger. Sa commande peut être manmuelle, grâce à un bouton de commande, ou à distance (électrique ou pneumatique) grâce à un pilotage approprié. La flèche P représente l'action du pilotage manuel, électrique ou pneumatique du distributeur 21.

La vanne représentée à la figure 1 est une vanne normalement fermée, en l'absence de la pression dans la chambre 13. En effet l'effet du ressort 19 est de repousser la zone 15 de l'élément 8 dans la portée cylindrique 16. Il pourra être intéressant notamment du point de vue de la sécurité de prévoir que le distributeur 21 soit maintenu dans sa position de purge de la chambre 13 dès qu'une chute de pression intervient dans la conduite en amont de la cloison 4.

Le mode de réalisation représenté à la figure 2 diffère de celui précédemment décrit par le fait que l'obturateur 8 se présente comme un clapet 22 conique qui est appuyé sur un siège conique 23 ménagé autour du canal 5 sur la cloison 4. Les surfaces du clapet et du siège qui coopèrent sont situées pratiquement à l'extrême bord du clapet (voir figures suivantes) de sorte que pratiquement il n'existe aucune surface de la tête de piston 12 qui offre à la pression régnant en amont de la cloison 4 quand la vanne est fermée, la possibilité d'engendrer un effort axial sur l'obturateur 8. Si, par exemple, au-delà du joint torique 22 qui forme l'appui du clapet sur le siège, il subsiste une surface soumise à la pression du fluide, on pourrait équilibrer l'effort axial qui en résulterait sur l'obturateur en diminuant le diamètre de la partie coulissante de la tête de piston dans l'enceinte 7.

On notera par ailleurs que la tête de piston aval 11 est de diamètre plus important que celui de la tête de piston 12 (contrairement au cas de la figure précédente où ils sont égaux). Il s'ensuit que la pression statique et dynamique du fluide sur l'obturateur a une composante qui accompagne l'effet du ressort 19 et va dans le sens d'une fermeture rapide dans le cas d'une purge de la chambre 13.

Enfin, le conduit 20 d'alimentation de cette chambre pourvu du distributeur 21 est issu d'un sélecteur 24 permettant de sélectionner comme source de pression, soit une source extérieure 25 soit la pression régnant dans le corps de la vanne en amont du siège 23. Le distributeur 21 est ici représenté sous forme d'une électrovanne monostable si bien que la vanne pilotée selon l'invention se ferme en l'absence d'énergie pneumatique ou d'énergie électrique.

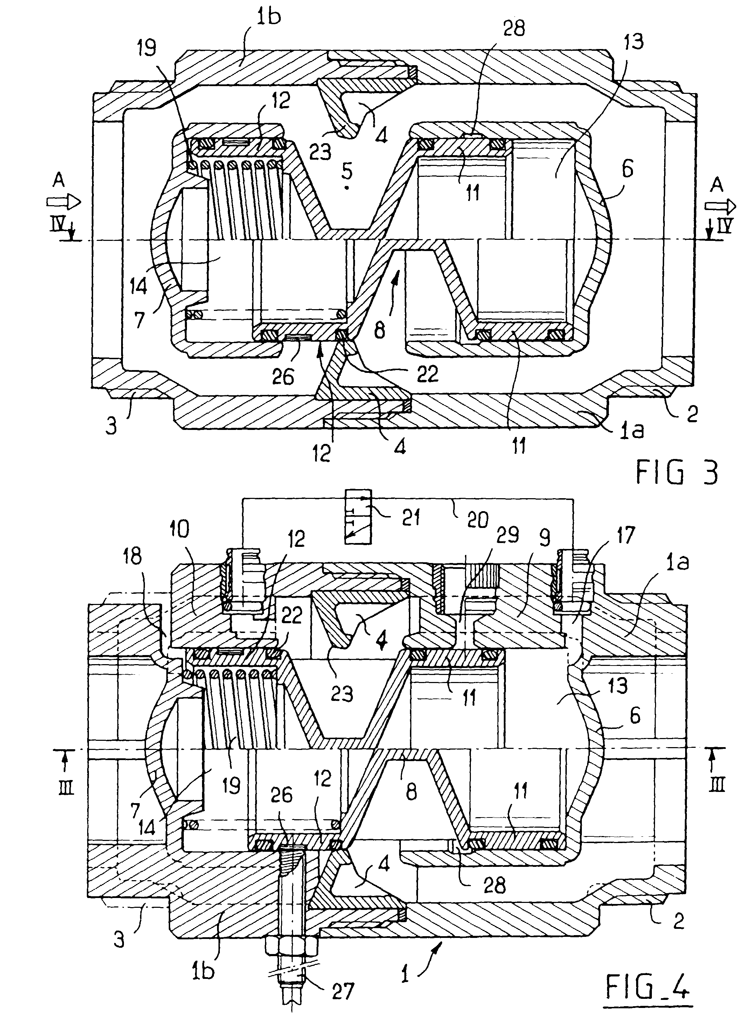

Les figures 3 et 4 représentent une réalisation industrielle du dispositif illustré en figure 2. La figure 3 est une vue en coupe de la figure 4 selon la ligne III-III de celle-ci et la figure 4 est une coupe selon la ligne IV-IV de la figure 3. On retrouve sur ces figures certains des éléments déjà décrits avec les mêmes références. Le corps 1 de la vanne est en deux parties 1a et 1b assemblées par vissage. Cette structure en deux parties permet la mise en place de l'élément d'obturation 8 dans les enceintes 6 et 7 (on notera que cet élément est représenté dans chaque figure en partie supérieure, dans son état d'ouverture de la vanne et en partie inférieure, dans son état de fermeture). En même temps cet assemblage par vissage permet la fixation de la cloison médiane 4 qui forme le siège 23 sur lequel le joint torique 22 de l'élément 8 vient reposer comme un clapet.

Outre des joints pour assurer l'étanchéité du coulissement des têtes de piston dans les enceintes 6 et 7, l'élément 8 comporte une gorge 26 dans la tête de piston 12 qui constitue un index susceptible d'être détecté par un capteur 27 de la position de l'élément 8 par rapport au siège 23. Ce capteur est porté par le corps 12 et s'étend dans une des ailes radiales qui relie l'enceinte 7 à la partie 1b du corps 1.

On remarquera également que l'enceinte 6 possède une gorge 28 qui est découverte au moins partiellement par la tête de piston 11 lorsque l'élément 8 est dans son état de fermeture. Dans cette gorge prend naissance un conduit de purge 29 qui est ménagée dans l'aile radiale 9 de liaison de l'enceinte 6 à la partie 1b du corps 1. Ce conduit communique donc avec la portion de canal intérieur de la vanne qui est située en aval du siège 23 lorsqu'elle est isolée de la partie amont et la relie avec l'atmosphère extérieure si le fluide est de l'air ou une bâche de recueil du fluide si c'est un liquide ou un autre gaz. Il s'agit là d'une mesure appréciable du point de vue de la sécurité car elle permet de purger des appareils qui au moment de la coupure seraient bloqués par exemple en position de serrage d'une pièce.

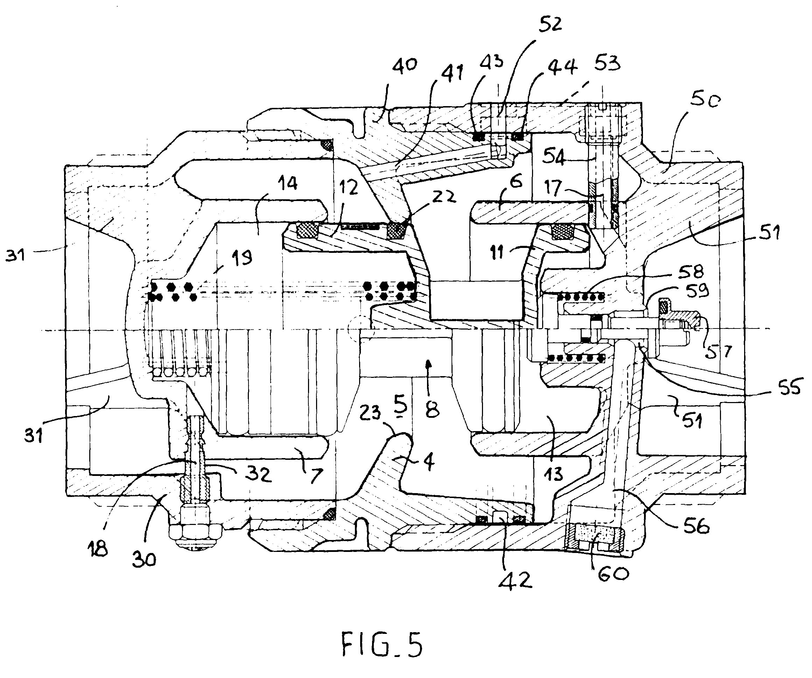

A la figure 5, contrairement aux figures 3 et 4, l'état d'ouverture de la vanne est représenté en partie inférieure et l'état de fermeture en partie supérieure. Les éléments représentés à cette figure et déjà décrits, portent les mêmes références qu'aux figures précédentes.

Le corps de vanne est ici en trois parties coaxiales 30, 40, 50. La partie 30 porte par trois ailettes 31 l'enceinte 7 dans laquelle coulisse la tête 12 du piston-élément d'obturation 8.

Le conduit 18 est réalisé par un insert tubulaire métallique 32 mis en place entre deux ailettes 31. On s'est en effet rendu compte qu'incorporer ce conduit dans une ailette conduisait à la prévoir plus épaisse que les autres ce qui, dans une fabrication par moulage de matière plastique provoque un déséquilibre au moment du refroidissement (retraits d'amplitudes différentes) qui désaxent l'enceinte 7.

Sur cette première partie 30 du corps de vanne est vissée la seconde partie 40 qui forme la cloison 4 et porte le siège 23 sur lequel vient prendre appui le joint 22 porté par la tête de piston 12. Ce vissage peut être verrouillé par tout moyen approprié (collage, soudage...). La partie 40 comporte un canal intérieur 41 qui constitue un tronçon du conduit 20 (voir figure 4) de pilotage de la vanne par la pression régnant en amont du siège 23. Ce canal intérieur 41 débouche dans une gorge extérieure 42 ménagée dans une partie cylindrique extérieure de la pièce 40 et encadrée par deux joints toriques 43, 44.

Sur cette seconde pièce 40 du corps de vanne, la troisième partie 50 vient également se visser et recouvrir la gorge 42. Cette partie porte par trois ailettes 51 l'enceinte 6 dans laquelle coulisse la tête 11 du piston 8. En regard de la gorge 42, la pièce 50 comporte un trou 52 qui débouche à l'extérieur du corps de la vanne au niveau d'une surface 53 destinée à accueillir le distributeur de pilotage 21 (voir figure 4). Un insert tubulaire 54 qui constitue le conduit 17 d'alimentation en fluide de pilotage de la chambre 13, relie cette surface 53 à la chambre 13.

Dans cette réalisation, la purge de la partie aval de la canalisation fermée par la vanne est assurée au travers d'un conduit 55, 56 réalisé dans la paroi de fond de l'enceinte 6, ce conduit comportant un clapet de fermeture 57 rappelé par un ressort 58 sur son siège 59 et dont la tige fait saillie dans la chambre 13. Ainsi, lorsque la vanne est fermée, la tête 11 du piston repousse la tige du clapet 57 qui ouvre le conduit de purge 55, 56. Le ressort 58 sera taré de manière à s'opposer à l'effet de la pression régnant dans la chambre 13.

On remarquera enfin sur cette figure 5, d'une part la présence d'un silencieux d'échappement 60 à l'extrémité du conduit 56 (qui peut être remplacée par un bouchon si le fluide est liquide) et d'autre part que le ressort 19 est double pour obtenir un effort de propulsion de l'obturateur non linéaire et plus élevé au début de la course.

## Revendications

1. Vanne comportant un corps (1) sensiblement allongé creux et équipé à ses extrémités longitudinales de moyens (2,3) de raccordement à une canalisation à obturer, ce corps comportant une paroi transversale (4) au travers de laquelle est ménagé un canal central (5) et comportant un élément (8) d'obturation mobile parallèlement à l'écoulement (A) du fluide, entre une position de fermeture dans laquelle une zone (15,22) de cet élément est au contact d'une portée (16,23) fixe ménagée sur la paroi transversale (4) et une position d'ouverture dans laquelle cette même zone (15,22) est éloignée de cette portée (16,23), l'élément d'obturation (8) étant en forme de piston avec deux têtes d'extrémité (11,12) formant les parois coulissantes de deux chambres fixes (13,14) coaxiales au canal situées dans le corps (1) de part et d'autre de la paroi transversale (4), caractérisée en ce que la vanne est une vanne pilotée, en ce que les chambres (13, 14) sont isolées du canal (5) intérieur du corps (1) et comportent des moyens (17, 18, 19) pour agir sur les têtes (11, 12) d'extrémité en déplacement de l'élément (8) par rapport à la portée (16, 23), et en ce que la somme des projections dans un plan transversal des surfaces de l'élément (8) exposées à la pression régnant dans le canal, situées en amont de la zone (15,22) de contact de l'élément (8) d'obturation avec la portée et tournées vers l'aval est égale à la somme des mêmes projections des surfaces semblablement situées, exposées à cette pression et tournées vers l'amont.

2. Vanne selon la revendication 1, caractérisée en ce que la portée (16) de contact de l'élément d'obturation est cylindrique.

3. Vanne selon la revendication 1, caractérisée en ce que la portée (23) de contact de l'élément d'obturation est conique.

4. Vanne selon l'une des revendications 1 à 3, caractérisée en ce que ces moyens comprennent un ressort de rappel (19) comprimé entre une tête (12) de piston située en amont de la portée et le fond axial de la chambre (14).

5. Vanne selon l'une des revendications 1 à 3, caractérisée en ce qu'elle comporte des moyens (21) commandés de mise en communication sélective de la seconde chambre (13) située en aval de la portée avec une source de pression et avec un orifice de purge.

6. Vanne selon la revendication 5, caractérisé en ce que la source de pression est formée par la partie du canal central (5) située en amont de la portée (7, 23).

7. Vanne selon la revendication 5, caractérisée en ce que la tête (11) de piston aval de l'élément d'obturation (8) est de diamètre au moins égal à celui de la tête (12) de piston amont.

8. Vanne selon l'une des revendications 1 à 3, caractérisée en ce que le corps comporte un orifice de purge (29) de la partie aval de la canalisation obturée situé en aval de la zone de contact (15, 22) de l'organe d'obturation avec la portée (16, 23), que l'organe d'obturation (8) découvre lorsqu'il est dans son état de fermeture du canal central (5).

9. Vanne selon l'une des revendications 1 à 3, caractérisée en ce que le corps comporte un canal de purge (55, 56) situé en aval de la zone de contact de l'organe d'obturation avec la portée, normalement fermé par un clapet (57) ouvert par l'organe d'obturation (8) lorsqu'il est dans son état de fermeture du canal central (5).

10. Vanne selon l'une des revendications 1 à 3, caractérisée en ce que le corps (1) est en deux parties (1a, 1b) assemblées l'une à l'autre par vissage sensiblement au droit de la paroi transversale (4).

11. Vanne selon l'une des revendications 1 à 3, caractérisée en ce que le corps (1) est en trois parties (30, 40, 50), vissées les unes aux autres, la partie centrale (40) portant la paroi (4) et chaque partie d'extrémité (30, 50) portant l'enceinte (7, 6) de la chambre (12, 13) correspondante.

12. Vanne selon l'une des revendications 1 à 3, caractérisée en ce que l'enceinte (6, 7) des première (13) et seconde (14) chambres déterminent avec le corps (1) un canal de circulation du fluide de section annulaire.

13. Vanne selon l'une des revendications 1 à 3, caractérisée en ce que la position de fermeture de l'organe d'obturation est définie par une butée (6, 23) fixe par rapport au corps (1) de vanne.

14. Vanne selon l'une des revendications 1 à 3, caractérisée en ce qu'elle comporte un détecteur (27) de la position de l'organe d'obturation (8).

## Patentansprüche

1. Ventil mit einem hohlen, im wesentlichen länglichen Gehäuse (1), das an seinen Längsenden Mittel (2, 3) zum Verbinden mit einer zu verschließenden Rohrleitung hat und eine Querwand (4) enthält, in der ein zentraler Kanal (5) ausgebildet ist, und mit einem Verschlußelement (8), das parallel zur Fließrichtung (A) des Fluids zwischen einer Schließstellung, in der ein Bereich (15, 22) des Elements in Kontakt mit einer stationären Aufnahme (16, 23) steht, die in der Querwand (4) ausgebildet ist, und einer Öffnungsstellung, in der der Bereich (15, 22) von der Aufnahme (16, 23) beabstandet ist, bewegbar ist, wobei das Verschlußelement (8) als Kolben mit zwei Kolbenköpfen (11, 12) ausgebildet ist, die die gleitend verschiebbaren Wände zweier stationärer Kammern (13, 14) bilden, die koaxial zum Kanal im Gehäuse (1) zu beiden Seiten der Querwand (4) vorgesehen sind, dadurch **gekennzeichnet**, daß das Ventil ein vorgesteuertes Ventil ist, daß die Kammern (13, 14) vom im Gehäuse (1) ausgebildeten Kanal (5) isoliert sind und Mittel (17, 18, 19) haben, um auf die Kolbenköpfe (11, 12) im Sinne einer Verschiebung des Elements (8) relativ zur Aufnahme (16, 23) einzuwirken, und daß die Summe der auf eine Transversalebene gerichteten Projektionen der Flächen des Elements (8), die dem im Kanal herrschenden Druck ausgesetzt sind, stromaufwärts vom Kontaktbereich (15, 22) des Verschlußelementes (8) mit der Aufnahme liegen und stromabwärts weisen, gleich der Summe der gleichen Projektionen der gleichartig angeordneten Flächen ist, die diesem Druck ausgesetzt sind und stromaufwärts weisen.

2. Ventil nach Anspruch 1, dadurch **gekennzeichnet**, daß die Aufnahme (16), die mit dem Verschlußelement in Kontakt treten kann, zylindrisch ist.

3. Ventil nach Anspruch 1, dadurch **gekennzeichnet**, daß die Aufnahme (23), die mit dem Verschlußelement in Kontakt treten kann, konisch ist.

4. Ventil nach einem der Ansprüche 1 bis 3, **dadurch gekennzeichnet**, daß diese Mittel eine Rückstellfeder (19) enthalten, die zwischen einem Kolbenkopf (12), der stromaufwärts der Aufnahme liegt, und dem axialen Boden der Kammer (14) eingespannt ist.

5. Ventil nach einem der Ansprüche 1 bis 3, dadurch **gekennzeichnet**, daß es gesteuerte Mittel (21) zum wahlweisen Verbinden der zweiten Kammer (13), die stromabwärts der Aufnahme gelegen ist, mit einer Druckquelle und mit einer Ablauföffnung enthält.

6. Ventil nach Anspruch 5, dadurch **gekennzeichnet**, daß die Druckquelle von dem Teil des zentralen Kanals (5) gebildet ist, der stromaufwärts der Aufnahme (16, 23) liegt.

7. Ventil nach Anspruch 5, dadurch **gekennzeichnet**, daß der stromabwärts gelegene Kolbenkopf (11) des Verschlußelements (8) mindestens den gleichen Durchmesser hat wie der stromaufwärts gelegene Kolbenkopf (12).

8. Ventil nach einem der Ansprüche 1 bis 3, dadurch **gekennzeichnet**, daß das Gehäuse eine Ablauföffnung (29) für den stromabwärts gelegenen Teil der verschlossenen Leitung enthält, die stromabwärts des Kontaktbereiches (15, 22) des Verschlußelements mit der Aufnahme (16, 23) liegt und die von dem Verschlußelement (8) freigegeben wird, wenn dieses in seiner Stellung zum Schließen des zentralen Kanals (5) ist.

9. Ventil nach einem der Ansprüche 1 bis 3, dadurch **gekennzeichnet**, daß das Gehäuse einen Ablaufkanal (55, 56) hat, der stromabwärts des Kontaktbereichs des Verschlußelements mit der Aufnahme liegt und der normalerweise durch eine Klappe (57) verschlossen ist, die durch das Verschlußelement (8) geöffnet wird, wenn dieses in seiner Stellung zum Schließen des zentralen Kanals (5) ist.

10. Ventil nach einem der Ansprüche 1 bis 3, dadurch **gekennzeichnet**, daß das Gehäuse (1) zwei Teile (1a, 1b) hat, die im wesentlichen auf der Höhe der Querwand (4) miteinander verschraubt sind.

11. Ventil nach einem der Ansprüche 1 bis 3, dadurch **gekennzeichnet**, daß das Gehäuse (1) drei Teile (30, 40, 50) hat, die miteinander verschraubt sind, wobei am Mittelteil (40) die Wand (4) angeordnet ist und an den Endteilen (30, 50) die Begrenzungswände (7, 6) der jeweiligen Kammern (12, 13) angeordnet sind.

12. Ventil nach einem der Ansprüche 1 bis 3, dadurch **gekennzeichnet**, daß die Begrenzungswände (6, 7) der ersten Kammer (13) und der zweiten Kammer (14) mit dem Gehäuse (1) einen Fluidströmungskanal mit ringförmigem Querschnitt bilden.

13. Ventil nach einem der Ansprüche 1 bis 3, dadurch **gekennzeichnet**, daß die Schließstellung des Verschlußelements durch einen Anschlag (6, 23) definiert ist, der relativ zum Ventilgehäuse (1) unbeweglich ist.

14. Ventil nach einem der Ansprüche 1 bis 3, dadurch **gekennzeichnet**, daß es ein Detektorelement (27) zum Erfassen der Stellung des Verschlußelementes (8) enthält.

## Claims

1. A valve comprising a substantially hollow and elongate body (1) fitted at its longitudinal ends with means (2, 3) for coupling to a pipe that is to be closed, the body including a transverse partition (4) with a central channel (5) formed therethrough, and also including a closure element (8) that is movable parallel to the fluid flow (A) between a closed position in which a zone (15, 22) of said element is in contact with a stationary bearing surface (16, 23) formed on the transverse partition (4) and an open position in which said zone (15, 22) is at a distance from said bearing surface (16, 23), the closure element (8) being in the form of a piston having two end heads (11, 12) forming the slidable walls of two chambers (13, 14) that are coaxial with the channel and that are situated inside the body (1) on opposite sides of the transverse partition (4), characterized in that said valve is a controlled valve and in that the chambers (13, 14) are isolated from the channel (5) inside the body (1) and include means (17, 18, 19) for acting on the end heads for moving the element (8) relative to the bearing surface (16, 23) and in that the sum of the projections in a transverse plane of the surface areas of the element (8) exposed to the pressure that exists in the pipe located upstream from the zone of contact (15, 22) between the closure element (8) and the bearing surface and that face downstream is equal to the sum of the same projections of the surface areas that are similarly located exposed to said pressure and that face upstream.

2. A valve according to claim 1, characterized in that the contact bearing surface (16) of the closure element is cylindrical.

3. A valve according to claim 1, characterized in that the contact bearing surface (23) of the closure element is conical.

4. A valve according to any one of the claims 1 to 3, characterized in that said means comprise a return spring (19) compressed between a piston head (12) situated upstream from the bearing surface and the axial end of the corresponding chamber (14).

5. A valve according to any one of the claims 1 to 3, characterized in that it includes controlled means (21) for selectively putting the second chamber (13) situated downstream from the bearing surface into communication with a source of pressure and into communication with an exhaust orifice.

6. A valve according to claim 5, characterized in that the source of pressure is formed by the portion of the central channel (5) located upstream from said bearing surface (16, 23).

7. A valve according to claim 5, characterized in that the diameter of the downstream piston head (11) of the closure element (8) is not less than the diameter of the upstream piston head (12).

8. A valve according to an one of the claims 1 to 3, characterized in that the body includes an exhaust orifice (29) for the downstream portion of the closed pipe situated downstream from the contact zone (15, 22) between the closure element and the bearing surface (16, 23), as uncovered by the closure element (8) when in its position closing the central channel (5).

9. A valve according to any one of the claims 1 to 3, characterized in that the body includes an exhaust pipe (55, 56) situated downstream from the contact zone between the closure element and the bearing surface, which exhaust pipe is normally closed by a check valve (57) that is opened by the closure element (8) when in its position closing the central channel (5).

10. A valve according to any one of claims 1 to 3, characterized in that the body (1) comprises two portions (1a, 1b) that are assembled together by being screwed together substantially level with the transverse partition (4).

11. A valve according to any one of claims 1 to 3, characterized in that the body (1) comprises three portions (30, 40, 50) that are screwed together, the central portion (40) carrying the partition (4), and each of the end portions (30, 50) carrying the cylinder (7, 6) for the corresponding chamber (12, 13).

12. A valve according to any one of claims 1 to 3, characterized in that the cylinders (6, 7) of the first and second chambers (13, 14) co-operate with the body (1) to define a fluid flow path of annular section.

13. A valve according to any one of claims 1 to 3, characterized in that the closed position of the closure element is defined by an abutment (6, 23) which is stationary relative to the valve body (1).

14. A valve according to any one of claims 1 to 3, characterized in that it includes a position detector (27) for detecting the position of the closure element (8).
